# EUROPEAN PATENT APPLICATION

(11) **EP 4 431 977 A1**
(43) Date of publication of application: **18.09.2024**
(21) Application number: 23214517.7
(22) Date of filing: 06.12.2023
(51) Int. Cl.: G01S 7/4865, G01S 7/4861, G01S 7/487, G01S 7/481, G01S 17/10

(54) **LIDAR DETECTION METHOD, LIDAR AND COMPUTER-READABLE STORAGE MEDIUM**

(30) Priority: 19.12.2022 CN 202211653219
(71) Applicant: Suteng Innovation Technology Co., Ltd, Shenzhen City Guangdong 518000 (CN)
(72) Inventor: Gong, Changsheng, Shenzhen (CN); Du, Yajun, Shenzhen (CN)
(74) Representative: RGTH

(57) **Abstract**

This application pertains to a LiDAR detection method, including: emitting multiple primary laser beams, where there is at least partial overlap between reception analysis regions of the at least two emitted primary laser beams; receiving a first echo beam; when the first echo beam is received in an overlapping region of reception analysis regions of the first laser beam and the second laser beam, determining candidate TOF values of the first echo beam based on emission time of the first laser beam, emission time of the second laser beam, and reception time of the first echo beam; obtaining similarity values between each candidate TOF value of the first echo beam and a TOF value of at least one adjacent echo beam of the first echo beam, and determining a true TOF value of the first echo beam from the candidate TOF values of the first echo beam based on the similarity values.

## Description

### TECHNICAL FIELD

This application relates to the field of LiDAR, and in particular, to a LiDAR detection method, a LiDAR and a computer-readable storage medium.

### TECHNICAL BACKGROUND

A LiDAR consists of an emitting system, a receiving system, a scanning control system, and a data processing system. The LiDAR measures a distance by measuring a time difference between an outgoing detection laser beam and a received echo laser beam, and has the advantages of high resolution, high sensitivity, strong anti-interference ability, and not being affected by lighting conditions, etc. The LiDAR has been widely used in the fields of autonomous driving, a logistics vehicle, a robot, vehicle-road collaboration, and smart public transportation.

Both point frequency and detecting range of the LiDAR are critical indicators. Point frequency of a transceiving module in the LiDAR refers to measurement frequency of the transceiving module per unit time. The detecting range is from the minimum distance to the maximum distance that can be measured by the transceiving module. Generally, to prevent echo beams corresponding to two adjacent emitting beams from interfering with each other, a time interval between the two adjacent emissions should be longer than duration corresponding to the maximum range of one emission. However, such restrictions cause certain contradictions between the detecting range and the point frequency.

### SUMMARY

In view of shortcomings of the related art, this application aims to provide a LiDAR detection method, including:
emitting a plurality of primary laser beams, where
there is at least partial overlap between reception analysis regions of the at least two emitted primary laser beams, and the reception analysis region of the primary laser beam starts from emission time of the primary laser beam and has duration of a TOF value corresponding to the maximum detection distance of the primary laser beam;
time intervals between any two adjacent emissions of the plurality of the primary laser beams are different; and
the at least two emitted primary laser beams include a first laser beam and a second laser beam that are adjacent;
receiving a first echo beam;
when the first echo beam is received in an overlapping region of reception analysis regions of the first laser beam and the second laser beam, determining each candidate TOF value of the first echo beam based on emission time of the first laser beam and reception time of the first echo beam, and emission time of the second laser beam and reception time of the first echo beam;
obtaining similarity values between each candidate TOF value of the first echo beam and a TOF value of at least one adjacent echo beam of the first echo beam; and
determining a true TOF value of the first echo beam from the candidate TOF values of the first echo beam based on the similarity values.

In some embodiments, the at least one adjacent echo beam of the first echo beam comprises the at least one adjacent echo beam received before the first echo beam, or comprises the at least one adjacent echo beam received before the first echo beam and the at least one adjacent echo beam received after the first echo beam.

In some embodiments, determining a true TOF value of the first echo beam from the candidate TOF values of the first echo beam based on the similarity values comprises: when the similarity value is less than a preset threshold, determining that the candidate TOF value of the first echo beam corresponding to the similarity value less than the preset threshold is the true TOF value of the first echo beam.

In some embodiments, when none of the similarity values is less than the preset threshold, the first echo beam is determined as noise.

In some embodiments, the method further comprises: adjusting the preset threshold based on ambient light noise around the LiDAR and/or a moving speed of the LiDAR.

In some embodiments, the plurality of the primary laser beams are sequentially emitted at intervals of an emission period T plus or minus randomly generated an offset duration, and any two adjacent primary laser beams correspond to the different offset durations.

In some embodiments, the TOF value of the at least one adjacent echo beam of the first echo beam comprises two candidate TOF values of the at least one adjacent echo beam; and
obtaining similarity values between each candidate TOF value of the first echo beam and the TOF value of at least one adjacent echo beam of the first echo beam comprises: obtaining a similarity value between a higher candidate TOF value of the first echo beam and a higher candidate TOF value of at least one adjacent echo beam; and obtaining a similarity value between a lower candidate TOF value of the first echo beam and a lower candidate TOF value of at least one adjacent echo beam.

In some embodiments, the method further includes:
emitting a secondary laser beam between the two adjacent primary laser beams, where a reception analysis region of the secondary laser beam is in a reception analysis region of a previously emitted primary laser beam;
receiving a second echo beam;
when the second echo beam is received in an overlapping region of reception analysis regions of the first laser beam and the secondary laser beam, determining candidate TOF values of the second echo beam based on emission time of the first laser beam and reception time of the second echo beam, and emission time of the secondary laser beam and the reception time of the second echo beam;
obtaining the similarity values between the second echo beam and at least one adjacent echo beam of the second echo beam, where the similarity values comprise the similarity value between each candidate TOF value of the second echo beam and a TOF value of the at least one echo beam adjacent to the second echo beam, and/or the similarity value between a waveform of the second echo beam and a waveform of at least one echo beam adjacent to the second echo beam; and
determining a true TOF value of the second echo beam from the candidate TOF values of the second echo beam based on the similarity values.

In some embodiments, the reception analysis region of the secondary laser beam is staggered with a reception analysis region of a laser beam other than a previously emitted adjacent primary laser beam.

In some embodiments, obtaining the similarity value between the second echo beam and the at least one echo beam adjacent to the second echo beam comprises:
obtaining the similarity value between the second echo beam and at least one echo beam in the reception analysis region of a primary laser beam adjacent to the second echo beam.

In some embodiments, in any two adjacent secondary laser beams, an emission time interval between one secondary laser beam and a previously emitted primary laser beam adjacent to the secondary laser beam is different from an emission time interval between another secondary laser beam and a previously emitted primary laser beam adjacent to the another secondary laser beam; and
obtaining the similarity values between the second echo beam and the at least one echo beam adjacent to the second echo beam comprises:
obtaining the similarity value between each candidate TOF value of the second echo beam and the TOF value of at least one echo beam in the reception analysis region of the secondary laser beam adjacent to the second echo beam.

This application further provides a LiDAR, including:
a transceiving module, configured to emit a plurality of primary laser beams, where
there is at least partial overlap between reception analysis regions of the at least two emitted primary laser beams, and the reception analysis region of the primary laser beam starts from emission time of the primary laser beam and has duration of a TOF value corresponding to the maximum detection distance of the primary laser beam;
time intervals between any two adjacent emissions of the plurality of primary laser beams are different;
the at least two emitted primary laser beams comprise a first laser beam and a second laser beam adjacently emitted after the first laser beam; and
the transceiving module is further configured to receive a first echo beam; and
a processing module, configured to: when the first echo beam is received in an overlapping region of reception analysis regions of the first laser beam and the second laser beam, determine candidate TOF values of the first echo beam based on emission time of the first laser beam and reception time of the first echo beam, and emission time of the second laser beam and reception time of the first echo beam, obtain similarity values between each candidate TOF value of the first echo beam and a TOF value of at least one adjacent echo beam of the first echo beam, and determine a true TOF value of the first echo beam from the candidate TOF values of the first echo beam based on the similarity values.

This application further provides a LiDAR, including:
a processor; and
a memory having executable codes stored thereon, where when executed by the processor, the executable codes enable the processor to execute the method in any one of the foregoing aspects.

This application further provides a computer-readable storage medium having executable codes stored thereon, where when executed by a processor of an electronic device, the executable codes enable the processor to execute the method in any one of the foregoing aspects.

In the embodiments of this application, the reception analysis regions of the primary laser beams during the at least two emissions are configured to be overlapped at least partially, so that both high point frequency and a great detecting range can be implemented. However, it is difficult to determine which emission corresponds to the echo beam received in the overlapping region of the reception analysis regions. At least two TOF values are calculated based on a time difference between the emission time and the reception time, including a true TOF value and a false TOF value. Based on an assumption that adjacently received echo beams are most likely to be reflected by the same object, the true TOF values corresponding to the adjacent echo beams remain unchanged or close, and a time interval between two adjacent emissions is changed, so that there is a specific difference between false TOF values of the adjacent echo beams. Therefore, the similarity values between the TOF values of the echo beams and the TOF value of the at least one adjacent echo beam are calculated, and the true TOF value can be identified based on the similarity value values.

### BRIEF DESCRIPTION OF DRAWINGS

FIG. 1 is a schematic diagram of a principle of a reception analysis region of a laser beam emitted by a LiDAR;
FIG. 2 is a schematic diagram of an embodiment of a LiDAR detection method according to this application;
FIG. 3 is a schematic diagram of reception analysis regions of a first laser beam and a second laser beam emitted by a LiDAR;
FIG. 4 is a schematic diagram of an embodiment of a reception analysis region of a primary laser beam emitted by a LiDAR;
FIG. 5 is a schematic diagram of an embodiment of reception analysis regions of a primary laser beam and a secondary laser beam emitted by a LiDAR;
FIG. 6 is a schematic diagram of an embodiment of a LiDAR according to an embodiment of this application; and
FIG. 7 is a schematic diagram of an embodiment of a LiDAR according to an embodiment of this application.

### DETAILED DESCRIPTION

The following describes embodiments of the present application more specifically with reference to the accompanying drawings. Although the embodiments of the present application are shown in the accompanying drawings, it should be understood that the present application can be implemented in various forms and should not be limited by the embodiments illustrated herein. On the contrary, the embodiments are provided for a more thorough and complete understanding of the present application and delivery of the complete scope of the present application to a person skilled in the art.

The terms used in the embodiments of the present application are merely for the purpose of illustrating specific embodiments, but are not intended to limit the present application. The singular forms of "a," "the," and "this" as used in the present application and the appended claims are also intended to include plural forms, unless the context clearly indicates otherwise. It should be further understood that the term "and/or" used in this specification refers to any combination of one or more of the associated items listed and all possible combinations thereof.

It should be understood that although the terms "first," "second," "third," and the like are used to describe various types of information in the present application, the information should not be limited to these terms. The terms are only used to distinguish between information of the same type. For example, without departing from the scope of the present application, first information can also be referred to as second information, and similarly, second information can also be referred to as first information. Therefore, a feature with a determiner such as "first" or "second" can expressly or implicitly include one or more features. In the description of the present application, "a plurality of" means two or more, unless otherwise specifically defined.

A LiDAR is a radar system that emits a laser beam to detect a target's characteristics such as position and speed. A working principle of the LiDAR is to emit a laser beam to a target, and then calculate a time difference between receiving a reflected echo beam and transmitting the emitted laser beam, and the time difference is a TOF (time-of-flight) value of the laser beam. Based on the TOF value, the LiDAR calculates target parameters such as distance and azimuth, where the target reflects back the echo beam, to detect an external environment. The LiDAR generally includes a transceiving module and a processing module. The transceiving module converts an electrical pulse into an optical pulse for emission, and then reversely converts an optical pulse reflected from the target into an electrical pulse, and the processing module calculates characteristics based on the electrical pulse. In some embodiments, the LiDAR can further include a scanning module (for example, a MEMS galvanometer) for changing an emission direction of the emitted laser beam, so that the laser beam scans in a field of view. Optical paths of a reflection laser beam and an outgoing laser beam are coaxial. The reflected echo beam returns via the optical path from a scanning module to the transceiving module and is received by a receiver in the transceiving module. The LiDAR can use a single channel to scan. Alternatively, the LiDAR can use multiple channels to scan simultaneously or alternately, in which case, the LiDAR can use multiple transceiving modules as multiple channels to scan simultaneously, and the laser beams of the multiple channels, such as outgoing laser beam and reflection laser beam, are isolated with each other.

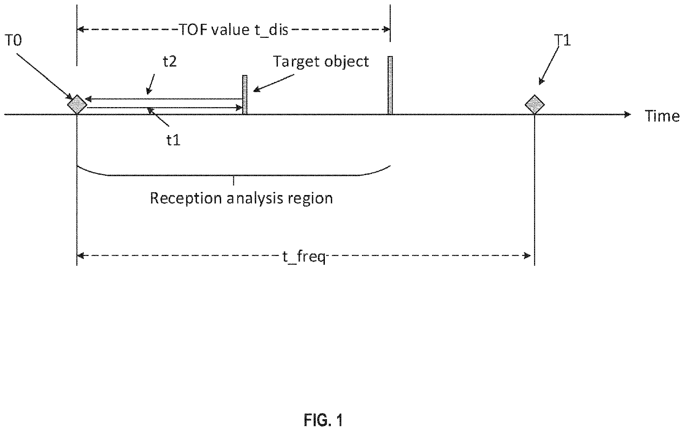

Both point frequency and a detecting range of the LiDAR are critical indicators. FIG. 1 is a schematic diagram of a principle of a reception analysis region of a laser beam emitted by a LiDAR. As shown in FIG. 1, the LiDAR emits two adjacent laser beams at the moments T0 and T1. For a laser beam emitted by the transceiving module of the LiDAR at the moment T0, theoretically, the maximum TOF value t_dis of the laser beam is equal to a TOF value t1 from emitting the laser beam to the farthest detectable target plus a TOF value t2 from the target to return to the LiDAR, where t1=t2. The maximum distance dis_max of the detecting range satisfies that dis_max=c*t_dis/2, where c represents the velocity of light. The greater the maximum distance is in the detecting range, the higher the maximum TOF value is, and the longer the analysis region is, which is the required time for pending reception processing after a laser beam is emitted. A time interval between two adjacent emissions affects the point frequency. The higher the point frequency is, the shorter the time interval t_freq between the two adjacent emissions is. For ease of description, hereinafter, a reception analysis region of the emitted laser beam means duration that starts from emission time of the laser beam and extends a TOF value of the maximum detection distance of the emitted laser beam.

Generally, in order that an echo signal of a laser beam currently emitted can be received, and to prevent the echo signal of the emission n from interfering with the echo signal of the emission n+1, the reception analysis region of the emission n should be shorter than t_freq to ensure that the receiving time of the echo signal of the emission n does not fall behind the emitting time of the emission n+1. However, such a limitation causes a contradiction between the detecting range and the point frequency. If the detecting range is increased to a certain extent, that is, t_dis is increased, t_freq also needs to be increased, thereby reducing the point frequency; or if the point frequency is increased to a certain extent, t_dis is decreased, thereby reducing the detecting range.

In some embodiment, the reception analysis regions of the two adjacent emissions overlap, that is, the reception analysis region of the emission n lasts longer than a time interval between the emission n and the emission n+1, to resolve the contradiction between the point frequency and the detecting range. In addition, when the echo beam is received in the overlapping region of the two adjacent reception analysis regions, a similarity value of receiving times of the echo beam and the adjacent echo beam is used to determine which reception analysis region the echo beam belongs to, to resolve an interference problem caused by overlapping of the reception analysis regions. With reference to an accompanying drawing, the embodiment of this application is described below by using an example.

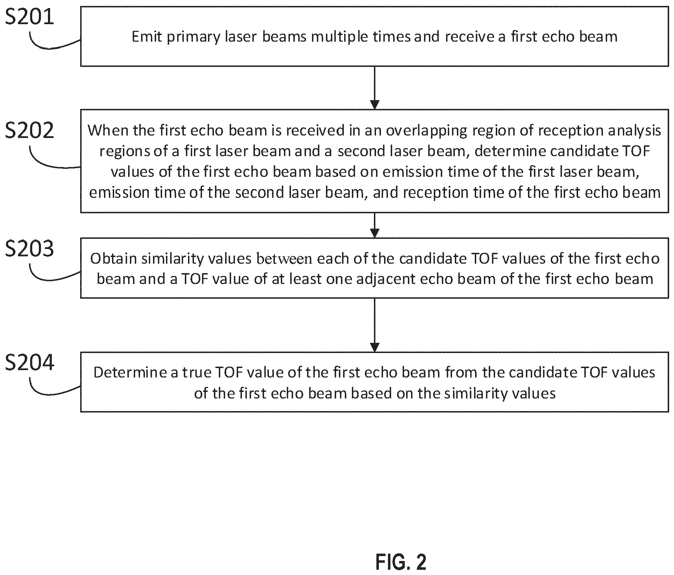

As shown in FIG. 2, FIG. 2 is a schematic diagram of an embodiment of a LiDAR detection method according to this application. The detection method includes the following.

S201. Emit primary laser beams multiple times and receive a first echo beam.

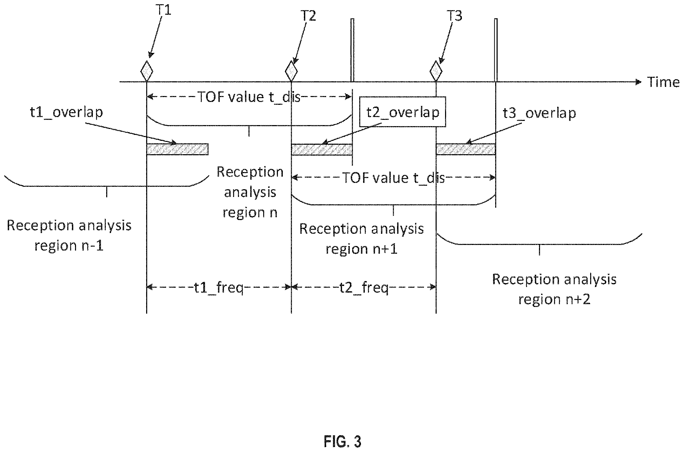

There is at least partial overlap between reception analysis regions of at least two primary laser beams. For ease of description, the two emitted laser beams are referred to hereinafter as a first laser beam and a second laser beam that are adjacent to each other. As shown in FIG. 3, FIG. 3 is a schematic diagram of reception analysis regions of the first laser beam and the second laser beam emitted by a LiDAR. After the emission moment T1 of the first laser beam, t1_overlap represents the overlapping region of the reception analysis regions of the first laser beam and the previously emitted laser beam, and t1_freq represents a time interval between the emission moment T1 of the first laser beam and the emission moment T2 of the second laser beam. After T2, t2_overlap represents the overlapping region of the reception analysis regions of the first laser beam and the second laser beam, and t2_freq represents a time interval between the emission moment T2 of the second laser beam and the emission moment T3 of the next primary laser beam. After the emission moment T3 of the third laser beam L3, t3_overlap represents the overlapping region of the reception analysis regions of the second laser beam and the third laser beam.

Time intervals between any two adjacent emissions of the multiple primary laser beams are different. For example, t1_freq and t2_freq shown in FIG. 3 are different. There are several ways to change the emission time interval. For example, an emitter in the transceiving module is configured to emit with the emission period T and random offset duration, and any two adjacent primary laser beams correspond to the different offset durations. The offset duration can be positive or negative, and the emitter is controlled to determine an actual emission time interval by plusing the offset duration and the emission period T. For another example, the emitter in the transceiving module is configured to emit with the emission period T. The emitter is controlled to regularly increase or decrease the emission period T by fixed duration, to differentiate a time interval between the two adjacent emissions.

5202. When the first echo beam is received in an overlapping region of reception analysis regions of a first laser beam and a second laser beam, determine candidate TOF values of the first echo beam based on emission time of the first laser beam, emission time of the second laser beam, and reception time of the first echo beam.

When receiving the first echo beam, the transceiving module of the LiDAR obtains a reception moment of the echo beam. Referring to FIG. 3, when the reception moment of the first echo beam is after a moment T2 of emitting the second laser beam and before the moment T3 of emitting the next primary laser beam, if the reception moment of the first echo beam is after the t2_overlap and before the moment T3, the first echo beam does not fall into an overlapping region of any reception analysis regions, and the first echo beam can be determined as an echo beam formed after the second laser beam is emitted and reflected by the object. The TOF value of the first echo beam can be calculated based on the reception moment of the first echo beam and the emission moment of the second laser beam.

When the reception moment of the first echo beam is in the overlapping region t2_overlap, it is necessary to determine whether the first echo beam is the echo beam of the first laser beam or the echo beam of the second laser beam. In some embodiments, two candidate TOF values of the first echo beam can be calculated based on the moments T1 and T2, and the reception moment of the first echo beam respectively.

S203. Obtain similarity values between each of the candidate TOF values of the first echo beam and a TOF value of at least one adjacent echo beam of the first echo beam.

Because multiple adjacent echo beams are most likely to be reflected by the same object when a scanning density of the LiDAR is high enough in a scanning process, the true TOF values of the multiple adjacent echo beams are similar. The similarity values between each of the candidate TOF values of the first echo beam and the TOF value of the at least one adjacent echo beam can be calculated, so as to determine the true TOF value of the first echo beam.

When calculating the similarity value between the TOF value of the first echo beam and the TOF value of an adjacent echo beam, if the adjacent echo beam also has at least two candidate TOF values, the similarity values between each of the candidate TOF values of the first echo beam and each candidate TOF value of the adjacent echo beam can be calculated. For example, the candidate TOF values of the first echo beam are t1_cand and t2_cand, and the candidate TOF values of the adjacent echo beam are t3_cand and t4_cand. The similarity value between t1_cand and t3_cand and the similarity value between t1_cand and t4_cand are calculated, and the similarity value between t2_cand and t3_cand and the similarity value between t2_cand and t4_cand are calculated.

Alternatively, if the adjacent echo beam used for calculation is received before the first echo beam, and the true TOF value of the adjacent echo beam has been obtained, the similarity value between each candidate TOF value of the first echo beam and the true TOF value corresponding to the adjacent echo beam can be calculated.

S204. Determine a true TOF value of the first echo beam from the candidate TOF values of the first echo beam based on the similarity values.

A difference between the candidate TOF values of the first echo beam is the time interval between T1 and T2, and a difference between the candidate TOF values of the adjacent echo beam is also an interval between two adjacent emissions. Because the first echo beam and the adjacent echo beam have similar true TOF values or the same true TOF values, and also have different time intervals between two adjacent emissions, among t1_cand and t2_cand, and t3_cand and t4_cand, the similarity value between two true TOF values are higher than the similarity value between the true TOF value and the false TOF value, and also higher than the similarity value between the two false TOF values. Therefore, a true TOF value of the first echo beam can be determined from each candidate TOF value of the first echo beam based on the similarity value.

In some embodiments, the similarity values can be sorted in sequence by value, and the two TOF values with the highest similarity value are true TOF values of the first echo beam and the adjacent echo beam.

In some embodiments, it can be determined whether each similarity value is greater than a preset threshold. When the similarity value is less than the preset threshold, the candidate TOF value of the first echo beam corresponding to the similarity value less than the preset threshold is determined to be the true TOF value of the first echo beam. In practice, it is possible that the first echo beam and the previous adjacent echo beam are not reflected by the same object. For example, the first echo beam may be caused by ambient noise. In some examples, when none of the similarity values is less than the preset threshold, the first echo beam is determined as noise.

There are several methods of calculating the similarity value. For example, the difference between two TOF values is calculated as the similarity value. The similarity value being greater than the preset threshold means the difference is less than a preset value.

In some embodiments, the preset threshold is fixed. Alternatively, the preset thresholds may vary in different scenarios. For example, the detection method provided in this embodiment further includes: adjusting the preset threshold based on ambient light noise around the LiDAR and/or a moving speed of the LiDAR. For example, the preset thresholds can be set as several (for example, 2, 3 or 4) different grades corresponding to different moving speed ranges of the LiDAR, or corresponding to different ambient light noise (for example, ambient light noise during the day is different than ambient light noise during the night). The LiDAR chooses a preset threshold according to a corresponding grade based on a current moving speed or current ambient light noise.

In the embodiments of this application, the reception analysis regions of the primary laser beams during the at least two emissions are configured to overlap at least partially, so that both high point frequency and a great detecting range can be implemented. However, as a result, at least two TOF values of the echo beam received in the overlapping region can be calculated and the at least two TOF values include a true TOF value and a false TOF value. Based on an assumption that adjacently received echo beams are most likely to be reflected by the same object, the true TOF values corresponding to the adjacent echo beams remain unchanged or close, and a time interval between two adjacent emissions is changed, so that there is a specific difference between false TOF values of the adjacent echo beams. Therefore, the similarity values between the TOF values of the echo beams and the TOF value of the at least one adjacent echo beam are calculated, and the true TOF value can be identified based on the similarity value.

In some embodiments, in step S203, for the adjacent echo beam whose TOF value is compared with that of the first echo beam in terms of the similarity value, one echo beam before the first echo beam may be used, or at least two echo beams before the first echo beam may be used, so that calculation accuracy can be improved compared with the case of using only one echo beam for comparison. In some embodiments, in step S203, for the adjacent echo beam whose TOF value is compared with that of the first echo beam in terms of the similarity value, one or at least two echo beams after the first echo beam may be used. During scanning of the LiDAR, the first echo beam and the previous echo beam may be reflected by different objects. Due to the continuity of the scan, the first echo beam and the next echo beam may be reflected by the same object. In some embodiments, the adjacent echo beams used for comparison can include both at least one echo beam before the first echo beam and at least one echo beam after the first echo beam. In some embodiments, the number of adjacent echo beams used for comparison is 3 or 4 to balance calculation accuracy and complexity.

In step S203, in a case of using two candidate TOF values of at least one adjacent echo beam to calculate the similarity value, obtaining similarity values includes obtaining the first similarity value and the second similarity value, where the first similarity value refers to a similarity value between a higher candidate TOF value of the first echo beam and a higher candidate TOF value of at least one adjacent echo beam; and the second similarity value refers to a similarity value between a lower candidate TOF value of the first echo beam and a lower candidate TOF value of at least one adjacent echo beam.

In an example, the first similarity value and the second similarity value correspond to the same adjacent echo beam. In some embodiments, when the similarity value is obtained, the candidate TOF values are not sorted in sequence by value, and similarities between various groups are directly calculated. For example, the foregoing similarity values between t1_cand and t3_cand, and t1_cand and t4_cand, and similarity values between t2_cand and t3_cand, t2_cand and t4_cand. In some embodiments, the candidate TOF values are sorted in sequence by value, getting the result that t1_cand is greater than t2_cand and t3_cand is greater than t4_cand. Then only calculating the similarity value between t1_cand and t3_cand (that is, the first similarity value) and the similarity value between t2_cand and t4_cand (that is, the second similarity value).

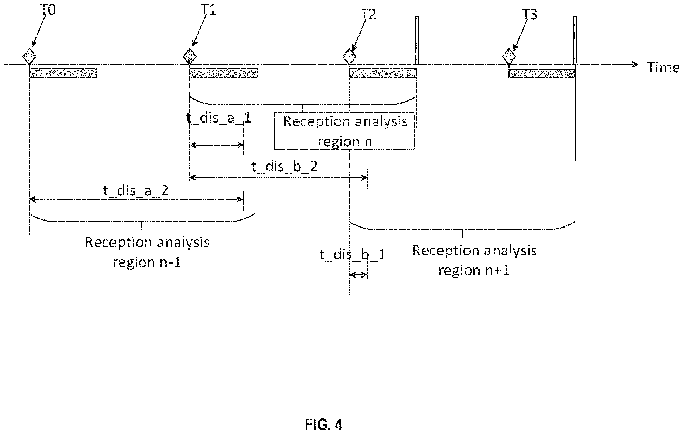

In an example, the adjacent echo beam corresponding to the first similarity value and the adjacent echo beam corresponding to the second similarity value are different. For example, as shown in FIG. 4, FIG. 4 is a schematic diagram of an embodiment of a reception analysis region of a primary laser beam emitted by a LiDAR. When calculating the similarity value, the reception analysis region is used as a data obtaining window. To the current reception analysis region n, there is an overlapping region t1_overlap corresponding to a start part of the current reception analysis region n and a previous reception analysis region n-1, and an overlapping region t2_overlap corresponding to a end part of the current reception analysis region n and a next reception analysis region n+1. When an echo beam 1 is received in the overlapping region t1_overlap, the echo beam 1 corresponds to two candidate TOF values, namely, t_dis_a_1 (a reception moment of the echo beam 1 minus an emission moment T1 of the current primary laser beam) and t_dis_a_2 (a reception moment of the echo beam 1 minus an emission moment T0 of the previous primary laser beam). Because two adjacent echo beams are most likely to be reflected by the same object, an echo beam 2 is most likely to be received in the overlapping region t2_overlap. The echo beam 2 corresponds to two candidate TOF values, namely, t_dis_b_1 (a reception moment of the echo beam 2 minus an emission moment T2 of the current primary laser beam) and t_dis_b_2 (a reception moment of the echo beam 2 minus an emission moment T1 of the previous primary laser beam). When calculating the similarity value, a similarity value between t_dis a_1 and t_dis_b_1 and a similarity value between t_dis a_1 and t_dis_b_2 are calculated separately, and a similarity value between t_dis_a_2 and t_dis_b_1 and a similarity value between t_dis_a_2 and t_dis_b_2 are calculated separately. Alternatively, the candidate TOF values are first sorted in sequence by value, and as a result, t_dis a_1 is less than t_dis_a_2 and t_dis_b_1 is less than t_dis_b_2. Then only calculate the similarity value between t_dis a_1 and t_dis_b_1 (that is, the second similarity value) and the similarity value between t_dis_a_2 and t_dis_b_2 (that is, the first similarity value).

In an embodiment, in step S201, the LiDAR further emits a secondary laser beam between two adjacent emissions of the primary laser beams in step S201, where a reception analysis region of the secondary laser beam is shorter than a reception analysis region of the primary laser beam. To cover the short-distance field of view and the long-distance field of view during the scan, emission power of the transceiving module in the LiDAR is adjusted to ensure that emission power for the secondary laser beam is less than emission power for the primary laser beam. The reception analysis region of the secondary laser beam is covered by the reception analysis region of the previously emitted primary laser beam. In some embodiments, the reception analysis region of the secondary laser beam overlaps the reception analysis region of the previously emitted primary laser beam and/or the reception analysis region of the secondary laser beam overlaps the reception analysis region of the next emitted primary laser beam. In this way, there is an overlap among the reception analysis regions of three laser beams (two primary laser beams and one secondary laser beam). For an echo beam received in the overlapped reception analysis region, three candidate TOF values are obtained, and similarity values between each of the three candidate TOF values and the TOF value of an adjacent echo beam need to be calculated separately, and the true TOF value is determined from the three candidate TOF values based on the similarity values.

In an optical path of the LiDAR, a small portion of the energy (that is, stray light) of the outgoing laser beam emitted by the laser passes through an unwanted path and directly reaches the receiver in the transceiving module. The echo laser beam received by the receiver includes the echo laser beam returned from the outgoing laser beam, and the stray light. After receiving the stray light, the receiver excites some single photon units and outputs photocurrent signals, i.e., foregoing signals. The true echo beam returned from a target object at a close distance reaches the receiver faster. The photocurrent signals (reflection signals) of the true echo beam are staged with the foregoing signals and cannot be identified, resulting in detection failure. In practice, the higher the power of the outgoing beam is, the greater the energy of the stray light is, and the longer the extinction time of the foregoing signals is. The stray light leads to saturation of the receiver ahead of schedule directly, which makes the receiver unable to be excited by the echo beam from the close distance, thus creating a near-distance blind region of the LiDAR. The primary emission and secondary outgoing laser beam emit with different emission powers, and correspond to different detecting range and near-distance blind regions. In one detection cycle, the detection result of the primary outgoing laser beam and the detection result of the secondary outgoing laser beam are spliced together and fused to obtain point cloud data of the whole detecting range. For example, the secondary emission detection cycle detects 0-20 m near-distance regions to obtain a secondary emission detection result. When the primary outgoing laser beam adopts a long-range mode of operation, a primary emission detection cycle detects 15-200 m far-distance regions to obtain a primary emission detection result. Two sets of the detection result are spliced together and fused to obtain point cloud data covering 0 to 200 m, thus resolving the problem of a near-distance blind region.

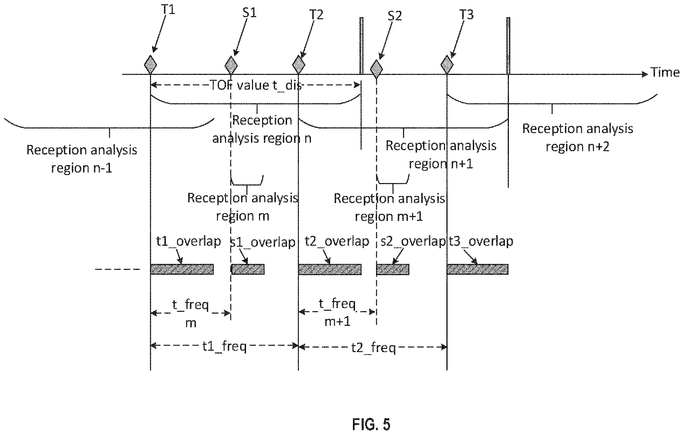

In an example, to reduce calculation complexity, the reception analysis region of the secondary laser beam can only overlap with the reception analysis region of the previously emitted primary laser beam, that is, the reception analysis region of the secondary laser beam is staggered with a reception analysis region of a laser beam other than the previously emitted adjacent primary laser beam. In some embodiments, as shown in FIG. 5, FIG. 5 is a schematic diagram of an embodiment of reception analysis regions of a primary laser beam and a secondary laser beam emitted by a LiDAR. Different from that in FIG. 3, the secondary laser beam s1 is emitted at a moment S1 between emission moments T1 and T2, and has a reception analysis region m with duration of s1_overlap, which is completely located in the reception analysis region n of the first laser beam and does not overlap with the moment T2. A secondary laser beam s2 is emitted at a moment S2 between emission moments T2 and T3 of emitting the primary laser beams separately, and has a reception analysis region m+1 with duration of s2_overlap, which is completely located in the reception analysis region n+1 of the second laser beam and does not overlap with the moment T3.

The LiDAR also receives a second echo beam. When the second echo beam is located within the reception analysis region m of the secondary laser beam s1, candidate TOF values of the second echo beam is determined based on the emission time T1 of the first laser beam and the reception time of the second echo beam, and based on the emission time S1 of the secondary laser beam s1 and the reception time of the second echo beam. The LiDAR further obtains the similarity values between the second echo beam and the at least one adjacent echo beam of the second echo beam. In some embodiments, the similarity values between the second echo beam and at least one adjacent echo beam of the second echo beam includes: the similarity value between each of the candidate TOF values of the second echo beam and the TOF value of the at least one adjacent echo beam. The true TOF value of the second echo beam is determined from the candidate TOF values of the second echo beam based on the similarity values. When the second echo beam is located in the reception analysis region of the first laser beam L1 other than a reception analysis region of any other laser beam, the TOF value of the second echo beam is calculated based on the reception time of the second echo beam and the moment T1.

In some embodiments, the primary laser beam and the secondary laser beam have different emission power, waveforms of the echo beams after the primary laser beam and the secondary laser beam are reflected by the same object are different, and the waveform can include at least one parameter of broadening, peak, and energy of the echo beam. Therefore, the similarity values between the second echo beam and the at least one adjacent echo beam can also be similarity values between the waveform of the second echo beam and the waveform of the at least one adjacent echo beam, so as to determine whether the second echo beam is the echo beam of the primary laser beam or the echo beam of the secondary laser beam.

In some embodiments, when calculating the similarity values between the second echo beam and the at least one adjacent echo beam, the at least one adjacent echo beam may include an echo beam located in the reception analysis region of the adjacent primary laser beam, and/or an echo beam located in the reception analysis region of the adjacent secondary laser beam.

In an example, for any two adjacent secondary laser beams, an emission time interval between one secondary laser beam and a previously emitted primary laser beam adjacent to the secondary laser beam is different from an emission time interval between the other secondary laser beam and a previously emitted primary laser beam adjacent to the secondary laser beam. Alternatively, an emission time interval between one secondary laser beam and a reference time of the previously emitted adjacent primary laser beam is different from an emission time interval between the other secondary laser beam and a reference time of the previously emitted adjacent primary laser beam. The emission time of the primary laser beam is obtained by increasing or decreasing a random offset according to the emission reference time. When calculating the similarity values between the second echo beam and the at least one adjacent echo beam, the similarity values include the similarity value between each of the candidate TOF values of the second echo beam and the TOF value of the at least one adjacent echo beam. When the second echo beam is the echo beam of the secondary laser beam, and the echo beams in the reception analysis region of the two adjacent secondary laser beams are most likely to reach the same object and have similar true TOF values. A time interval between the emission time of the secondary laser beam and the emission time of the previously emitted primary laser beam is changed, which can change the false TOF values. Therefore, based on the similarity values between each candidate TOF value of the second echo beam and the TOF value of the at least one adjacent echo beam, the true TOF value of the second echo beam can be identified.

In an example, as shown in FIG. 5, for the reception analysis region n of the primary laser beam emitted at the moment T1, there is an overlapping region t1_overlap corresponding to overlap between a start part of the reception analysis region n and the reception analysis region n-1 of the previous primary laser beam, an overlapping region t2_overlap corresponding to overlap between an end part of the reception analysis region n and the reception analysis region n+1 of the next primary laser beam, and an overlapping region s1_overlap corresponding to overlap between a middle part of the reception analysis region n and the reception analysis region m of the secondary laser beam emitted at the moment S1. When the echo beam a reflected by an object at a near distance is received in the overlapping region s1_overlap, because the two adjacent echo beams are most likely to reach the same object, an echo beam b is also most likely to be received in the overlapping region t1_overlap, an echo beam c is also received in the overlapping region t2_overlap, and an echo beam d and an echo beam e are also received respectively in the reception analysis regions m-1 and m+1 of the adjacent secondary laser beams. Each echo beam has two candidate TOF values, and an echo beam used with the echo beam a to calculate the similarity values can include at least one of the following: the echo beam b, the echo beam c, the echo beam d, or the echo beam e.

For the similarity value calculation method for the echo beam a and a method for determining the true TOF value based on the similarity value, refer to the foregoing similarity value calculation method for the first echo beam and the method for determining the true TOF value based on the similarity value. Details are not described herein again.

In an embodiment, the foregoing LiDAR detection method (that is, a method for overlapping reception analysis regions of adjacent beams) may or may not be applied. For example, the LiDAR is mounted on a moving object (for example, a vehicle) and receives an instruction from a control system on the moving object. This instruction can instruct the LiDAR to apply or not apply the foregoing LiDAR detection method. For example, in long-distance detection scenarios, for example, a vehicle on the highway, the LiDAR can enable a function of overlapping the reception analysis regions automatically or based on a received instruction, to perform the foregoing LiDAR detection method. In some short-distance detection scenarios, the LiDAR does not need high detection point frequency, and can disable a function of overlapping the reception analysis regions automatically or based on a received instruction, and does not perform the foregoing LiDAR detection method.

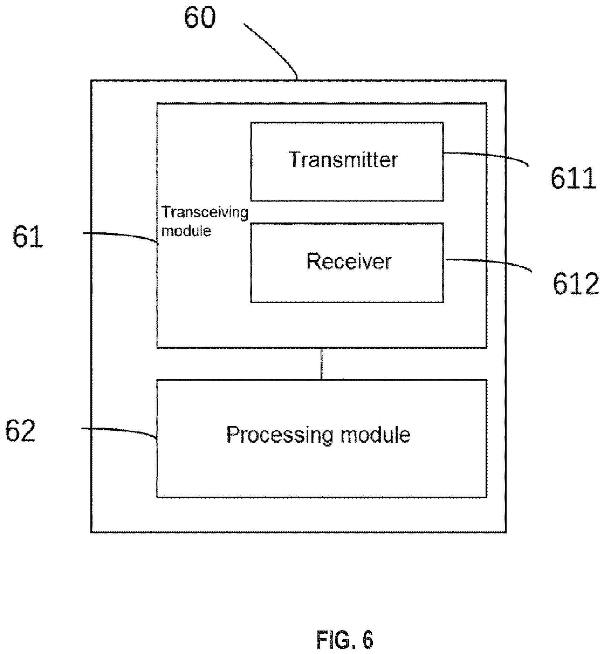

An embodiment of this application further provides LiDAR. As shown in FIG. 6, FIG. 6 is a schematic diagram of an embodiment of a LiDAR according to an embodiment of this application. The LiDAR 60 includes a transceiving module 61 and a processing module 62. The transceiving module 61 includes an emitter 611 for emitting a plurality of the primary laser beams. There is at least partial overlap between reception analysis regions of two primary laser beams. Time intervals between any two adjacent emissions of the plurality of the primary laser beams are different, and the at least two laser beams include a first laser beam and a second laser beam adjacently emitted after the first laser beam. The transceiving module 61 also includes a receiver 612. A time of the receiver 612 in working condition corresponds to a reception analysis region of the primary laser beam emitted by the emitter 611, to receive an echo beam (if exists) reflected from the primary laser beam received in the reception analysis region of the primary laser beam. In some embodiments, the receiver is configured to receive the first echo beam. The processing module 62 is configured to: when the first echo beam is received in an overlapping region of reception analysis regions of the first laser beam and the second laser beam, determine candidate TOF values of the first echo beam based on emission time of the first laser beam, emission time of the second laser beam, and reception time of the first echo beam; obtain similarity values between each candidate TOF value of the first echo beam and a TOF value of at least one adjacent echo beam of the first echo beam; and determine a true TOF value of the first echo beam from the candidate TOF value of the first echo beam based on the similarity values. For the apparatus in this embodiment, how the modules specifically implement the operations has been described in the embodiments of the method in detail, and no further elaboration is provided herein.

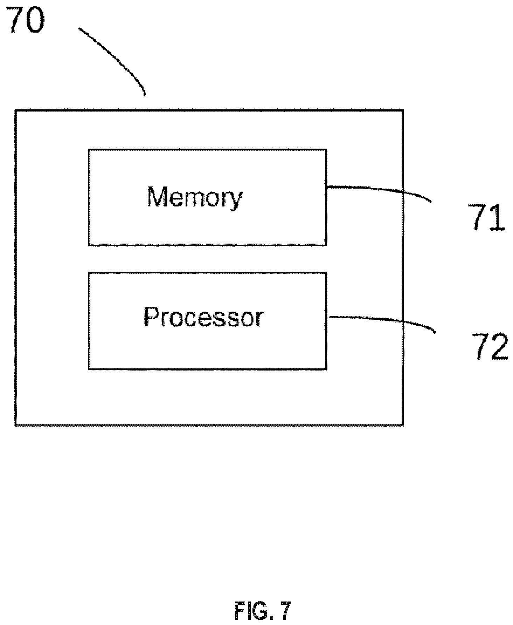

An embodiment of this application further provides a LiDAR. As shown in FIG. 7, FIG. 7 is a schematic diagram of an embodiment of LiDAR according to an embodiment of this application. An electronic device 70 includes a memory 71 and a processor 72.

The processor 72 may be a central processing unit (CPU), or may be another general-purpose processor, a digital signal processor (DSP), an application specific integrated circuit (ASIC), a field-programmable gate array (FPGA) or another programmable logic device, a discrete gate or transistor logic device, a discrete hardware component, or the like. The general-purpose processor can be a microprocessor, or the processor can be any conventional processor or the like.

The memory 71 may include various types of storage units such as a system memory, a read-only memory (ROM), and a permanent storage device. The ROM can store static data or an instruction required by the processor 72 or another module of the computer. The permanent storage device can be a readable/writable storage device. The permanent storage device can be a non-volatile storage that does not lose stored instructions and data even if the computer is powered off. In some embodiments, the permanent storage device uses a large-capacity storage device (for example, a magnetic or optical disk, or a flash memory). In some other implementations, the permanent storage device can be a removable storage device (e.g., a floppy disk, a CD-ROM drive). A system memory can be a readable/writable storage device or a volatile readable/writable storage device, for example, a dynamic random access memory. The system memory can store some or all of instructions and data required by the processor during running. In addition, the memory 61 may include any combination of computer-readable storage media, including various types of semiconductor memory chips (for example, a DRAM, an SRAM, an SDRAM, a flash memory, and a programmable read-only memory), and the magnetic disk and/or the optical disk may also be used. In some embodiments, the storage 510 can include a readable/writable removable storage apparatus such as a compact disc (CDs), a read-only digital versatile disk (e.g., DVD-ROM, a dual-layer DVD-ROM), a read-only Blue-ray disk, an ultra-dense disk, a flash memory card (e.g., an SD card, a min SD card, a micro-SD card, etc.), a magnetic floppy disk, etc. The computer-readable storage medium does not include a carrier wave or a transient electronic signal transmitted wirelessly or by wire.

Executable code is stored in the memory 71, and when being processed by the processor 72, the executable code may enable the processor 72 to perform a part or all of the foregoing method.

In addition, the method according to the present application can also be implemented as a computer program or a computer program product, where the computer program or the computer program product includes computer program code instructions for executing some or all of the steps in the above method in the present application.

Alternatively, the present application can be implemented as a computer-readable storage medium (or a non-transitory machine-readable storage medium or a machine-readable storage medium) having executable codes stored thereon (or the computer program or computer instruction codes). When executed by the processor (a server, or the like) of the electronic apparatus, the executable codes (or the computer program or the computer instruction codes) cause the processor to execute some or all of the steps in the above method in the present application.

The embodiments of the present application are described above, but the above description is exemplary other than exhaustive, and is not limited to the disclosed embodiments. Various modifications and alterations shall be evident to a person skilled in the art without departing from the scope and spirit of the described embodiments. The terms used herein are intended to optimally explain the principle of each embodiment, actual application or improvement of technologies in the art, or help other persons skilled in the art understand the embodiments disclosed herein.

## Claims

1. A LiDAR detection method, comprising:
emitting a plurality of primary laser beams, wherein:
there is at least partial overlap between reception analysis regions of at least two of the emitted primary laser beams, and the reception analysis region of the primary laser beam starts from emission time of the primary laser beam and has duration of a TOF (time-of-flight) value corresponding to a maximum detection distance of the primary laser beam;
time intervals between any two adjacent emissions of the plurality of the primary laser beams are different; and
the at least two emitted primary laser beams include a first laser beam and a second laser beam, and the first laser beam and the second laser beam are adjacent to each other;
receiving a first echo beam;
when the first echo beam is received in an overlapping region of reception analysis regions of the first laser beam and the second laser beam, determining candidate TOF values of the first echo beam based on emission time of the first laser beam, emission time of the second laser beam, and reception time of the first echo beam;
obtaining similarity values between each of the candidate TOF values of the first echo beam and a TOF value of at least one adjacent echo beam of the first echo beam; and
determining a true TOF value of the first echo beam from the candidate TOF values of the first echo beam based on the similarity values.

2. The method according to claim 1, wherein the at least one adjacent echo beam of the first echo beam comprises at least one adjacent echo beam received before the first echo beam; or the at least one adjacent echo beam of the first echo beam comprises the at least one adjacent echo beam received before the first echo beam and at least one adjacent echo beam received after the first echo beam.

3. The method according to claim 1, wherein the determining the true TOF value of the first echo beam from the candidate TOF values of the first echo beam based on the similarity values comprises:
when the similarity value is less than a preset threshold, determining that a candidate TOF value of the first echo beam corresponding to the similarity value less than the preset threshold is the true TOF value of the first echo beam.

4. The method according to claim 3, wherein when none of the similarity values is less than the preset threshold, the first echo beam is determined as noise.

5. The method according to claim 3, wherein further comprises:
adjusting the preset threshold based on ambient light noise around a LiDAR or a moving speed of the LiDAR.

6. The method according to claim 1, wherein the plurality of the primary laser beams are sequentially emitted at intervals of an emission period T plus or minus an offset duration randomly generated, and any two adjacent primary laser beams correspond to different offset durations.

7. The method according to claim 1, wherein the TOF value of the at least one adjacent echo beam of the first echo beam comprises two candidate TOF values of the at least one adjacent echo beam, and wherein the obtaining the similarity values between each of the candidate TOF values of the first echo beam and the TOF value of the at least one adjacent echo beam of the first echo beam comprises:
obtaining a similarity value between a higher candidate TOF value of the first echo beam and a higher candidate TOF value of the at least one adjacent echo beam; and
obtaining a similarity value between a lower candidate TOF value of the first echo beam and a lower candidate TOF value of the at least one adjacent echo beam.

8. The method according to claim 1, wherein the method further comprises:
emitting a secondary laser beam between two adjacent primary laser beams, wherein a reception analysis region of the secondary laser beam is in a reception analysis region of a previously emitted primary laser beam;
receiving a second echo beam;
when the second echo beam is received in an overlapping region of reception analysis regions of a first laser beam and the secondary laser beam, determining candidate TOF values of the second echo beam based on emission time of the first laser beam, emission time of the secondary laser beam, and reception time of the second echo beam;
obtaining similarity values between the second echo beam and at least one adjacent echo beam of the second echo beam, wherein the similarity values comprise similarity values of each of the candidate TOF values of the second echo beam and a TOF value of the at least one adjacent echo beam of the second echo beam, or similarity values between a waveform of the second echo beam and a waveform of the at least one adjacent echo beam of the second echo beam; and
determining a true TOF value of the second echo beam from the candidate TOF values of the second echo beam based on the similarity values.

9. The method according to claim 8, wherein the reception analysis region of the secondary laser beam is staggered with a reception analysis region of a laser beam other than a previously emitted adjacent primary laser beam.

10. The method according to claim 8, wherein the obtaining the similarity values between the second echo beam and the at least one adjacent echo beam of the second echo beam further comprises:
obtaining the similarity values between the second echo beam and at least one echo beam of the second echo beam, wherein the at least one echo beam of the second echo beam is in a reception analysis region of a primary laser beam adjacent to the second echo beam.

11. The method according to claim 10, wherein for any two adjacent secondary laser beams, an emission time interval between one secondary laser beam and a previously emitted primary laser beam adjacent to the secondary laser beam is different from an emission time interval between the other secondary laser beam and a previously emitted primary laser beam adjacent to the secondary laser beam; and
obtaining the similarity values between the second echo beam and the at least one echo beam of the second echo beam comprises:
obtaining the similarity values between each candidate TOF value of the second echo beam and the TOF value of at least one echo beam in the reception analysis region of the secondary laser beam adjacent to the second echo beam.

12. A LiDAR, comprising:
a transceiving module, configured to emit a plurality of primary laser beams, wherein:
there is at least partial overlap between reception analysis regions of at least two emitted primary laser beams, and the reception analysis region of the primary laser beam starts from emission time of the primary laser beam and has duration of a TOF value corresponding to a maximum detection distance of the primary laser beam;
time intervals between any two adjacent emissions of the plurality of primary laser beams are different;
the at least two emitted primary laser beams comprise a first laser beam and a second laser beam adjacently emitted after the first laser beam; and
the transceiving module is further configured to receive a first echo beam; and
a processing module, configured to: when the first echo beam is received in an overlapping region of reception analysis regions of the first laser beam and the second laser beam, determine candidate TOF values of the first echo beam based on emission time of the first laser beam, emission time of the second laser beam, and reception time of the first echo beam; obtain similarity values between each of the candidate TOF values of the first echo beam and a TOF value of at least one adjacent echo beam of the first echo beam; and determine a true TOF value of the first echo beam from the candidate TOF values of the first echo beam based on the similarity values.

13. A LiDAR, comprising:
a processor; and
a storage having executable codes stored thereon, wherein when executed by the processor, the executable codes cause the processor to execute a LiDAR detection method, wherein the LiDAR detection method comprises:
emitting a plurality of primary laser beams, wherein:
there is at least partial overlap between reception analysis regions of at least two of the emitted primary laser beams, and the reception analysis region of the primary laser beam starts from emission time of the primary laser beam and has duration of a TOF (time-of-flight) value corresponding to a maximum detection distance of the primary laser beam;
time intervals between any two adjacent emissions of the plurality of the primary laser beams are different; and
the at least two emitted primary laser beams include a first laser beam and a second laser beam, and the first laser beam and the second laser beam are adjacent to each other;
receiving a first echo beam;
when the first echo beam is received in an overlapping region of reception analysis regions of the first laser beam and the second laser beam, determining candidate TOF values of the first echo beam based on emission time of the first laser beam, emission time of the second laser beam, and reception time of the first echo beam;
obtaining similarity values between each of the candidate TOF values of the first echo beam and a TOF value of at least one adjacent echo beam of the first echo beam; and
determining a true TOF value of the first echo beam from the candidate TOF values of the first echo beam based on the similarity values.

14. A computer-readable storage medium having executable codes stored thereon, wherein when executed by a processor of an electronic apparatus, the executable codes cause the processor to execute a LiDAR detection method, wherein the LiDAR detection method comprises:
emitting a plurality of primary laser beams, wherein:
there is at least partial overlap between reception analysis regions of at least two of the emitted primary laser beams, and the reception analysis region of the primary laser beam starts from emission time of the primary laser beam and has duration of a TOF (time-of-flight) value corresponding to a maximum detection distance of the primary laser beam;
time intervals between any two adjacent emissions of the plurality of the primary laser beams are different; and
the at least two emitted primary laser beams include a first laser beam and a second laser beam, and the first laser beam and the second laser beam are adjacent to each other;
receiving a first echo beam;
when the first echo beam is received in an overlapping region of reception analysis regions of the first laser beam and the second laser beam, determining candidate TOF values of the first echo beam based on emission time of the first laser beam, emission time of the second laser beam, and reception time of the first echo beam;
obtaining similarity values between each of the candidate TOF values of the first echo beam and a TOF value of at least one adjacent echo beam of the first echo beam; and
determining a true TOF value of the first echo beam from the candidate TOF values of the first echo beam based on the similarity values.
